# EUROPÄISCHE PATENTSCHRIFT

(11) **EP 0 580 972 B1**
(45) Veröffentlichungstag und Bekanntmachung des Hinweises auf die Patenterteilung: **02.04.1997**
(21) Anmeldenummer: 93107965.1
(22) Anmeldetag: 17.05.1993
(51) Int. Cl.: B29C 63/28, B29C 63/14, B29C 51/16

(54) **Verfahren zum Auskleiden eines Kunststoffeimers sowie Kunststoffeimer zur Durchführung des Verfahrens**
Plastic bucket and process for lining the same
Seau en plastique et procédé pour le recouvrir

(30) Priorität: 30.07.1992 CH 2398/92
(43) Veröffentlichungstag der Anmeldung: 02.02.1994
(73) Patentinhaber: Schoeller-Plast S.A., CH-1680 Romont (CH)
(72) Erfinder: Umiker, Hans, CH-8132 Egg (CH)
(74) Vertreter: EGLI-EUROPEAN PATENT ATTORNEYS

(56) Entgegenhaltungen:
- EP-A- 0 242 161
- DE-A- 2 558 232
- FR-A- 2 079 231
- FR-A- 2 132 576
- FR-A- 2 449 818
- US-A- 3 379 798
- US-A- 3 866 816

## Beschreibung

Die Erfindung betrifft einen Kunststoffeimer mit speziellen Ausbildungen für das erleichterte Aufbringen einer Auskleidung und Verfahren zum Aufbringen einer Auskleidung auf die Innenfläche und/oder Aussenfläche dieses Kunststoffeimers gemäss dem Oberbegriff des Anspruchs 1.

Im Sinne eines sparsameren Umgangs mit Rohstoffen sowie einer Verringerung der Abfallmengen bemüht man sich seit längerer Zeit darum, insbesondere Lager- und Transportbehälter nicht als Wegwerfartikel, sondern möglichst wiederverwertbar zu konzipieren. Bei den für Transport und Lagerung flüssiger und pastöser Stoffe sowie von Granulaten verwendeten Kunststoffeimern stossen diese Bemühungen oft auf Schwierigkeiten, weil in vielen Fällen, z. B. bei Lagerung von Chemikalien wie Lösungsmitteln und insbesondere Farben, eine so starke Verschmutzung des Behälters eintritt, dass eine für die Wiederverwendung ausreichende Reinigung nicht möglich ist.

Aus diesem Grund und weil so die Innenfläche etwa in ihren chemischen und mechanischen Eigenschaften unabhängig vom Eimermaterial auf durch das Füllgut und andere damit verbundene Anforderungen abgestimmt werden kann, werden für manche Zwecke separat im Spritzgussverfahren hergestellte Auskleidungen aus Kunststoff verwendet, welche in den Eimer eingebracht werden und seine Innenfläche vollständig vor Kontakt mit dem Füllgut schützen. Die Auskleidungen, welche prinzipiell keine mechanische Stützfunktion erfüllen müssen und daher dünner und wesentlich leichter als der Eimer sein können, werden nach dem Einsatz als Abfall beseitigt, während der Eimer selbst wiederverwendet werden kann. Somit kommt wenigstens ein wesentlicher Teil des Materials des Transportbehälters mehrmals zum Einsatz.

Diese Lösung befriedigt dennoch nicht, weil die Auskleidung, welche separat vom Eimer in einer demselben angepassten Form fertiggestellt und anschliessend in denselben eingebracht wird, eine bestimmte Mindeststeifigkeit aufweisen muss, da sie sonst schwer handhabbar ist und nicht rasch und mit einfachen Mitteln derart in den Eimer eingebracht werden kann, dass sie dessen Innenfläche enganliegend und faltenlos überzieht. Für die Herstellung der Auskleidung muss aus diesen Gründen mehr Material aufgewendet werden, als ihre Funktion bedingt, folglich entsteht bei ihrer Beseitigung mehr Abfall als nötig wäre.

Aus FR-A-2.079.231 ist ein Beschichtungsverfahren bekannt, mittels welchem - unter Zuhilfenahme eines differentiellen Gasdruckes - eine erwärmte thermoplastische Folie auf die innere Oberfläche einer Hohlform aufgetragen und mit dieser verschweisst werden kann. Durch Löcher in der Form kann dabei die im Raum zwischen Folie und Form eingeschlossene Luft entweichen. Nach dem Erkalten der Folie muss die Form aus ihrer Stützschalung herausgenommen und umgedreht auf einer zweiten Stützschalung montiert werden. Danach wird mittels eines dem ersten ähnlichen Verfahren eine thermoplastische Folie auf die äussere Oberfläche der Form aufgetragen und gegebenenfalls mit der ersten Folie verschweisst. Dieses Verfahren eignet sich offenbar hervorragend für Bootskörper.

Der Erfindung liegt daher die Aufgabe zugrunde, eine Hohlform bzw. einen Kunststoffeimer zu entwickeln, der die Entlüftung aller Räume zwischen Beschichtungsfolie und Eimer gewährleistet und ein Verfahren anzugeben, bei welchem weder eine separate Fertigstellung einer Auskleidung und nachheriges Einbringen derselben in den Kunststoffeimer noch ein kompliziertes Ummontieren der halbbeschichteten Hohlform erforderlich ist und die Auskleidung nicht durch den Herstellungsprozess bedingt eine bestimmte Steifigkeit aufzuweisen braucht.

Die Erfindung, wie sie in den Ansprüchen gekennzeichnet ist, umfasst einen Kunststoffeimer, welcher sich - dank der Kombination von Löchern in Wänden und Boden und den das Absaugen der Luft aus den Räumen zwischen der Folie und dem Eimer begünstigenden Rinnen - für die Aufbringung einer Auskleidung nach dem erfindungsgemässen Verfahren besonders gut eignet. Ein wesentlicher Vorteil gegenüber dem Stand der Technik (D1) ergibt sich auch aus der Möglichkeit, den Eimer in einem Arbeitsgang und innert kürzester Zeit allseitig auszukleiden.

Das erfindungsgemässe Verfahren, wie es in den Ansprüchen gekennzeichnet ist, ermöglicht es, einen erfindungsgemässen Kunststoffeimer mit einer fast beliebig dünnen Auskleidung zu versehen, sodass deren Stärke und damit der Materialeinsatz ausschliesslich durch funktionsbedingte Anforderungen bestimmt wird und über das dadurch bedingte Mass nicht hinauszugehen braucht. In den meisten Fällen wird so eine beträchtliche Einsparung an nicht wiederverwendbarem Material und damit sowohl Schonung der Ressourcen als auch Entschärfung des Abfallproblems erreicht. Ausserdem ist weitgehende Freiheit in der Anpassung des Materials an die durch das Füllgut gegebenen Anforderungen gewährleistet.

Es werden ausserdem Weiterbildungen des erfindungsgemässen Verfahrens beschrieben, welche es ermöglichen, den Kunststoffeimer zusätzlich zur Auskleidung gleichzeitig mit einer äusseren Hülle zu versehen, welche zusammen mit der Auskleidung einen vollständigen Ueberzug bildet. Dadurch wird erreicht, dass nach einem Gebrauch des Eimers derselbe neben der für die Wiederverwendung erforderlichen neuen Auskleidung auch mit einer neuen, gewöhnlich einen auf das Füllgut bezüglichen Aufdruck tragenden Aussenhülle versehen werden kann, sodass der Eimer in einem Schritt für seine neue Verwendung bereitgemacht wird. Die Hülle hat ausserdem den Vorteil, dass sie den Kunststoffeimer vor äusserer Verschmutzung schützt und dadurch seine Wiederverwendung erleichtert.
〈 --〉

Im folgenden wird die Erfindung anhand von Figuren, welche nur Ausführungsbeispiele zeigen, näher erläutert. Es zeigen
- Fig. 1a - 1d: aufeinanderfolgende Schritte einer ersten Ausführungsform des erfindungsgemässen Verfahrens,
- Fig. 2a - 2d: aufeinanderfolgende Schritte einer zweiten Ausführungsform des erfindungsgemässen Verfahrens,
- Fig. 3: einen Längsschnitt durch einen ersten Kunststoffeimer mit einem gemäss dem erfindungsgemässen Verfahren aufgebrachten Ueberzug,
- Fig. 4: einen erfindungsgemässen, zur Durchführung des erfindungsgemässen Verfahrens besonders geeigneten Kunststoffeimer mit Ueberzug, links im Aufriss, rechts im Längsschnitt,
- Fig. 5: eine Draufsicht auf den Kunststoffeimer von Fig. 4, links von unten, rechts von oben,
- Fig. 6a: vergrössert einen Ausschnitt aus einer Aussenansicht der Seitenwand des Kunststoffeimers nach Fig. 4, 5,
- Fig. 6b: einen Schnitt längs B - B in Fig. 6a,
- Fig. 6c: einen Schnitt längs C - C in Fig. 6a,
- Fig. 7a: vergrössert einen Ausschnitt aus einer Draufsicht auf die Oberseite des Bodens des Kunststoffeimers nach Fig. 4, 5,
- Fig. 7b: einen Schnitt längs B - B in Fig. 7a und
- Fig. 7c: einen Schnitt längs C - C in Fig. 7a.

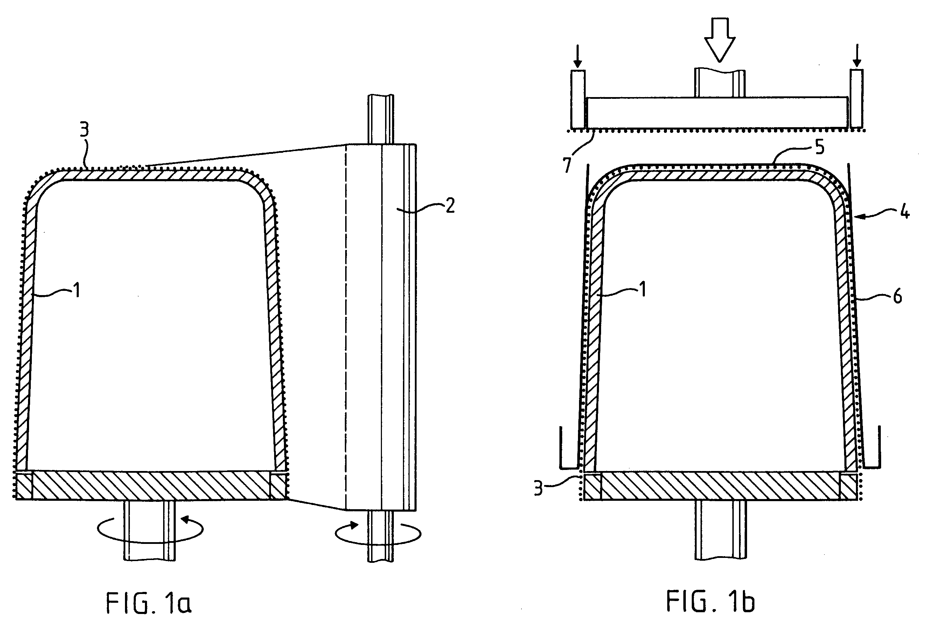

Gemäss einer ersten Ausführungsform des erfindungsgemässen Verfahrens wird (Fig. 1a) auf einen drehbar gelagerten Stempel 1 aus einem elastischen Material, vorzugsweise Silikon, von einer gleichfalls drehbar gelagerten Folienrolle 2 Auskleidefolie 3 aus Kunststoff, z. B. aus Polyolefinen, Polyamid oder Polyester, vorzugsweise eine Mehrschichtfolie aus mehreren dieser Komponenten gewickelt. Ihre Stärke beträgt vorzugsweise 0,3 mm oder weniger. Das Aufwickeln erfolgt so, dass eine dünne Schicht Auskleidefolie 3 die gesamte Aussenseite des Stempels 1 umhüllt. Derselbe wird erwärmt, sodass die Folie etwas anschmilzt und sich ein gleichmässiger Ueberzug ergibt. Anschliessend wird (Fig. 1b) ein Kunststoffeimer 4, z. B. aus Polyäthylen oder Polypropylen über den mit Auskleidefolie 3 überzogenen Stempel 1 gestülpt und der letztere durch Druckluft elastisch gedehnt und so die in plastischem Zustand befindliche Auskleidefolie 3 an die gesamte Innenfläche des Kunststoffeimers 4, bestehend aus der Oberseite seines Bodens 5 und der Innenseite seiner Seitenwand 6, angedrückt, sodass sie eine am Kunststoffeimer 4 haftende Auskleidung desselben bildet.

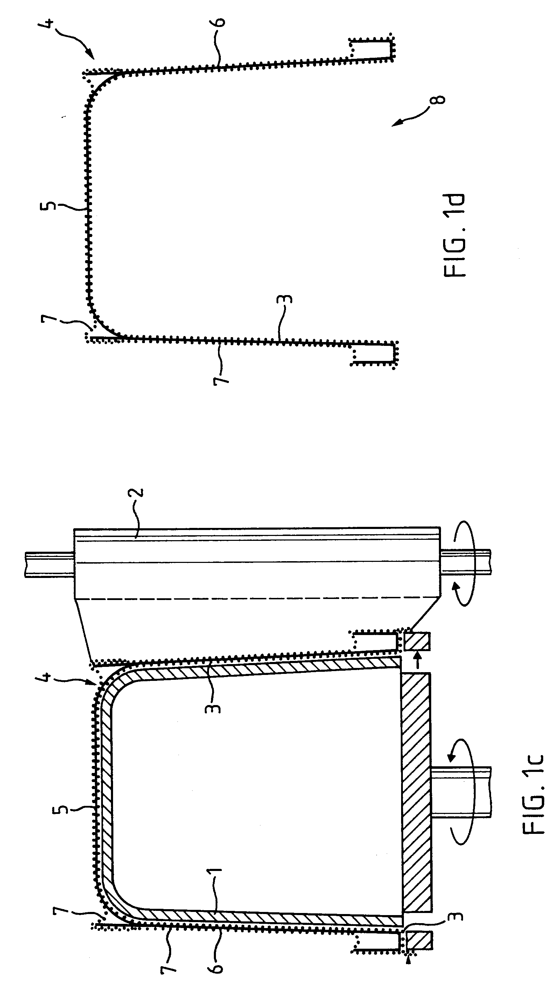

Darauf wird ein Stück Hüllfolie 7 als erster Teil einer äusseren Hülle auf den Boden 5 des Kunststoffeimers 4 aufgebracht. Im nächsten Schritt wird wiederum der Stempel gedreht und Hüllfolie 7 auf die Aussenseite der Seitenwand 6 gewickelt (Fig. 1c). Zuletzt wird das den Boden 5 bedeckende Stück Hüllfolie 7 mit dem zuletzt aufgebrachten Stück verschweisst und damit die Hülle vervollständigt sowie - längs des Randes der Oeffnung 8 des Kunststoffeimers 4, der dem oberen Rand seiner Seitenwand 6 entspricht - die Hüllfolie 7 mit der Auskleidefolie 3 verschweisst. Das Resultat (Fig. 1d) ist ein mit einem vollständigen Ueberzug versehener Kunststoffeimer 4.

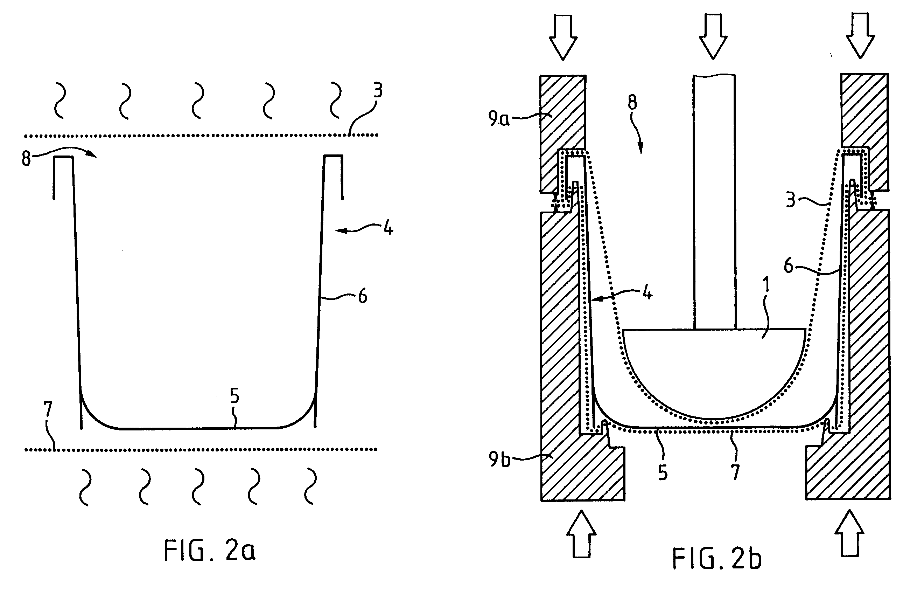

Gemäss einer zweiten Ausführungsform des erfindungsgemässen Verfahrens wird (Fig. 2a) die Auskleidefolie 3 über der Oeffnung 8 des Kunststoffeimers 4 ausgespannt und erwärmt. Desgleichen wird Hüllfolie 7 unterhalb des Kunststoffeimers 4 ausgespannt und erwärmt. Anschliessend wird (Fig. 2b) durch einen sich nach unten bewegenden oberen ringförmigen Schlitten 9a die Auskleidefolie 3 über den Rand der Oeffnung 8 hinaus über die Aussenseite der Seitenwand 6 hinuntergezogen und mit der Hüllfolie 7, welche zugleich durch einen sich nach oben bewegenden unteren Schlitten 9b bis nahe an den Rand der Oeffnung 8 hochgezogen wurde, verschweisst. Gleichzeitig mit der Bewegung der Schlitten 9a,b wird die plastisch dehnbare Auskleidefolie 3 durch einen Stempel 1, der hier allerdings nur eine Hilfsfunktion erfüllt, in das Innere des Kunststoffeimers 4 gedrückt. Die Form des Stempels 1 braucht hier nicht der des Inneren des Kunststoffeimers 4 zu entsprechen und die Auskleidefolie 3 in diesem Stadium nicht an der Innenfläche des letzteren anzuliegen.

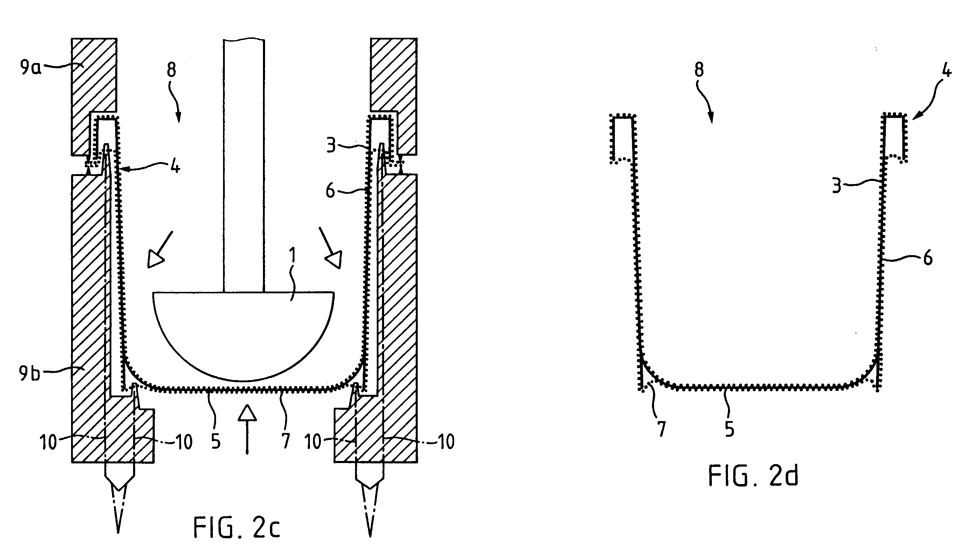

Im nächsten Schritt (Fig. 2c) wird die Hüllfolie 7 unterhalb des oberen Randes der Seitenwand 6 und im Bereich des unteren Randes derselben, wo sie an den Boden 5 anschliesst, mit Hohlfingern durchstossen, an welche Kanäle 10 durch den unteren Schlitten 9b anschliessen, über die die Hohlfinger mit einer Saugpumpe verbunden sind. Diese Absaugvorrichtung erzeugt durch Absaugen von Luft einen Unterdruck im zwischen der Hüllfolie 7 und der Aussenfläche des Kunststoffeimers 4 liegenden Bereich und durch Löcher im Kunststoffeimer 4, der weiter unten noch genauer beschrieben werden wird, auch aus dem zwischen der Auskleidefolie 3 und der Innenfläche desselben liegenden.

Aufgrund des Absaugens von Luft aus diesen Bereichen wird ein relativer Unterdruck erzeugt, sodass der überwiegende Aussendruck die Auskleidefolie 3 wie auch die Hüllfolie 7 an die Innenfläche bzw. die Aussenfläche des Kunststoffeimers 4 andrückt und ein glatter, faltenloser, im wesentlichen vollständiger Ueberzug entsteht (Fig. 2d).

Entscheidend beim erfindungsgemässen Verfahren ist es, dass die Auskleidefolie 3 in plastisch verformbarem Zustand in den Kunststoffeimer 4 eingebracht und an die Innenfläche desselben angedrückt wird. Der Kunststoffeimer 4 erfüllt damit die Funktion eines Formteils bei der Herstellung der Auskleidung, sodass dieselbe sozusagen in einer Form hergestellt wird, aus der sie nicht mehr entfernt zu werden braucht. Dadurch, dass sie mit ihrer Herstellung gleich an Ort und Stelle ist, entfallen diejenigen Anforderungen an die Auskleidung, insbesondere an ihre mechanischen Eigenschaften, welche sich bei separater Herstellung aus der Notwendigkeit, sie aus einer Form zu entfernen und in den Kunststoffeimer 4 einzusetzen, ergeben. Ausserdem werden so natürlich Arbeitsschritte eingespart.

Die Hüllfolie 7 kann mit einem farbigen Aufdruck versehen sein, welcher mit dem Füllgut in Beziehung steht, so kann sie z. B. die Marke, eine Gebrauchsanleitung oder dgl. tragen. Ein neu überzogener Kunststoffeimer 4 braucht nur noch gefüllt und verschlossen zu werden. Im übrigen können die Auskleidefolie 3 und die Hüllfolie 7 völlig gleich sein oder auch sich in Stärke und chemischer Zusammensetzung unterscheiden.

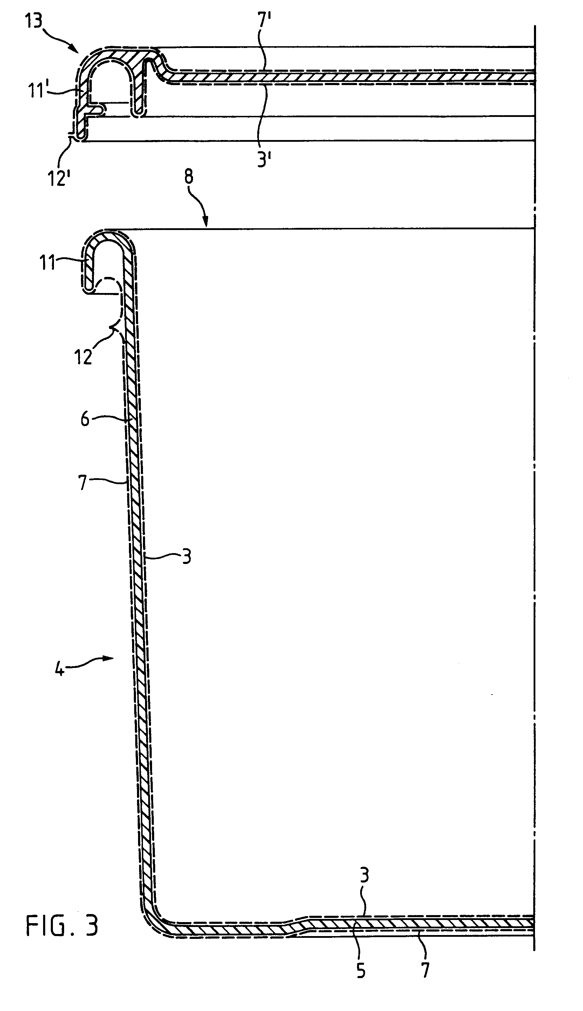

In Fig. 3 ist ein Kunststoffeimer 4 einfacher Ausführung dargestellt, dessen Innenfläche im erfindungsgemässen Verfahren gemäss der ersten Ausführungsform mit einer Auskleidefolie 3 überzogen ist, welche über den Rand seiner Oeffnung 8 und einen nach aussen weisenden und nach unten umgebogenen Flansch 11 ein kurzes Stück über die Aussenfläche der Seitenwand 6 gezogen ist. Dort ist sie längs einer umlaufenden Schweissnaht 12 mit der Hüllfolie 7, welche die Aussenfläche des Bodens 5 und den grössten Teil der Seitenwand 6 umhüllt, verschweisst.

Der Kunststoffeimer 4 ist mit einem Deckel 13 versehen, welcher mit einer umlaufenden Leiste 11' ausgestattet ist, die den Flansch 11 übergreifen kann und so den Deckel 13 aufschnappbar macht. Wie der Kunststoffeimer 4 ist auch der Deckel mit einer Auskleidefolie 3' - an der Unterseite -und einer Hüllfolie 7' - an der Oberseite - überzogen, welche längs einer umlaufenden Schweissnaht 12' verschweisst sind und einen vollständigen Ueberzug für den Deckel 13 bilden, sodass auch er nach Gebrauch nur neu überzogen zu werden braucht Und wie der Kunststoffeimer 4 wiederverwendet werden kann.

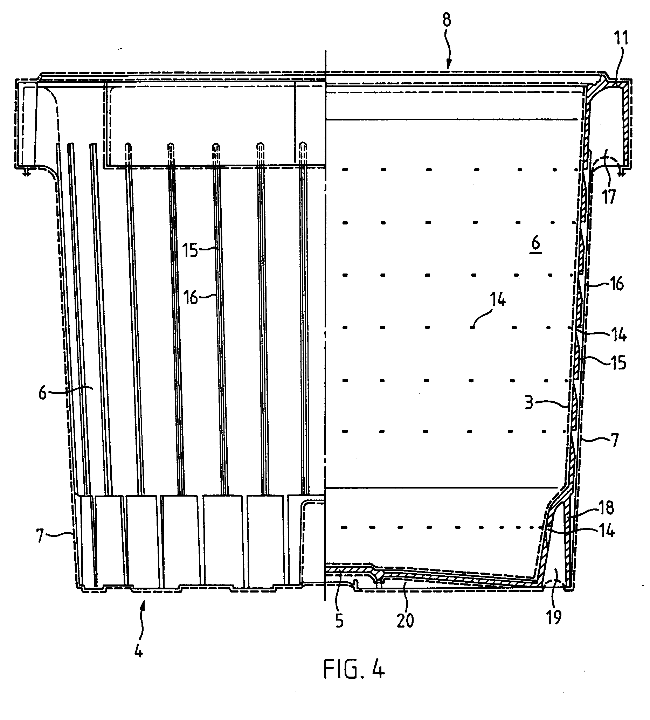

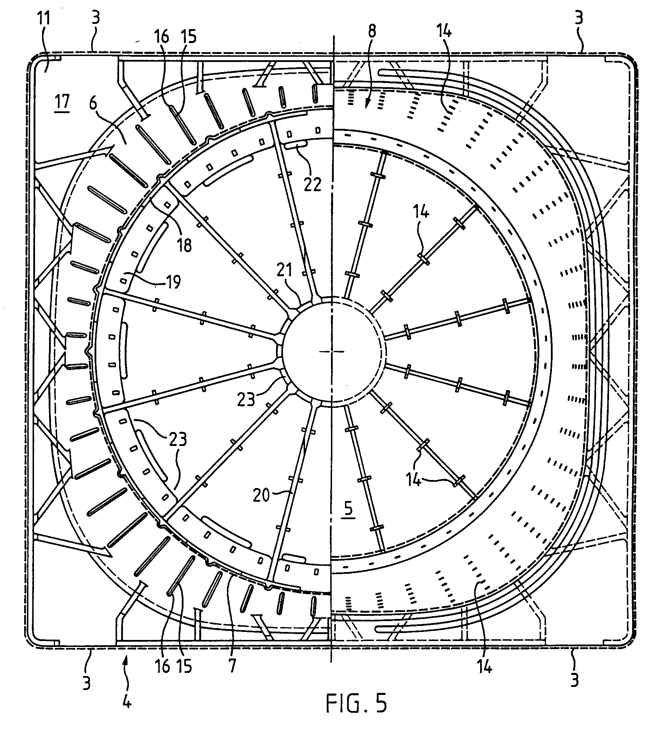

Insbesondere für die zweite Ausführungsform des erfindungsgemässen Verfahrens ist es von Vorteil, einen speziell angepassten Kunststoffeimer zu verwenden, wie er in den Figuren 4, 5, 6a-c und 7a-c dargestellt ist.

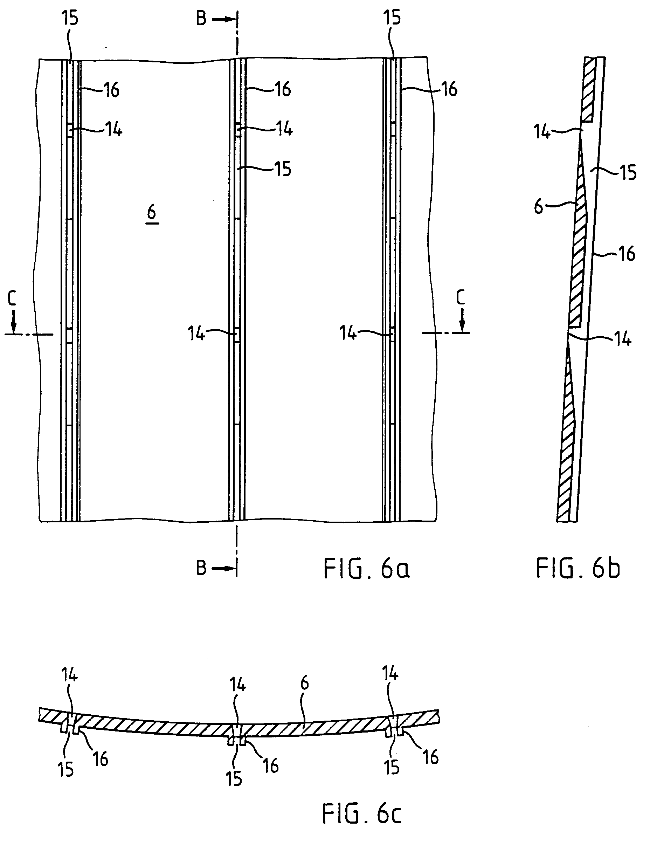

Der Kunststoffeimer 4 weist über seine Innenfläche, sowohl die Oberseite des Bodens 5 als auch die Innenseite der Seitenwand 6 verteilt eine Anzahl von bis zur Aussenfläche durchgehenden Löchern 14 auf. Der Querschnitt der in der Seitenwand angebrachten Löcher 14 wird nach aussen grösser, da sie sich in vertikaler Richtung stark erweitern, während sie in horizontaler Richtung etwas schmäler werden und in als etwa parallel von unten nach oben laufende Nuten ausgebildete Rinnen 15 (Fig. 6a-c) münden, die in Stegen 16 an der Aussenfläche der Seitenwand 6 angelegt sind und die an der Oberfläche höchstens 0,5 mm, vorzugsweise nicht mehr als 0,1 mm breit sind und welche ihrerseits in einen oberen Ringraum 17 münden, den ein die Oeffnung 8 des Kunststoffeimers 4 umgebender, nach aussen abstehender und fast durchgehend nach unten umgebogener Flansch 11 und die Aussenseite der Seitenwand 6 zwischen sich bilden.

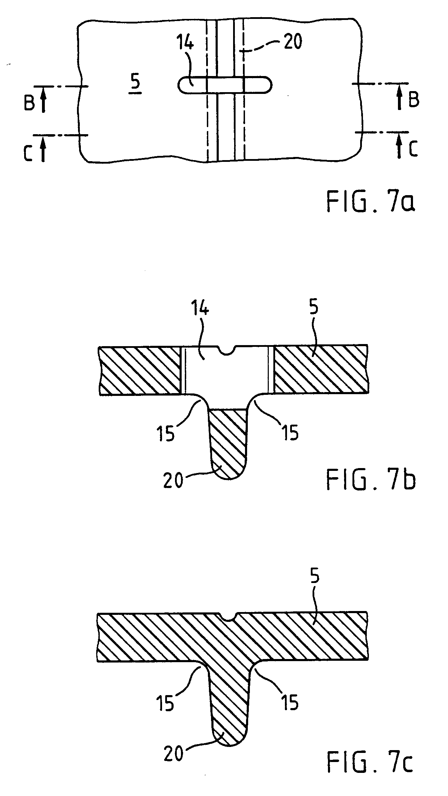

Am bodenseitigen Ende springt die Seitenwand 6 etwas ein, während ein Ring 18 etwa in der Fortsetzung ihres oberen Teils nach unten läuft und den unteren Teil der Seitenwand mit Abstand umgibt, sodass er mit ihr einen unteren Ringraum 19 einschliesst, in den auch ein Teil der Löcher 14 in der Seitenwand 6 mündet. Der Boden 5 weist an seiner Unterseite radiale Stege 20 auf, die bis zum Rand des Bodens 5, d. h. bis zum unteren Ringraum 19 durchgehen. Jeder Steg 20 bildet (Fig. 7a-c) mit angrenzenden Streifen der Unterseite des Bodens 5 beidseits seiner Basis je eine Rinne 15, welche somit in den besagten unteren Ringraum 19 münden. Die Löcher 14 sind als jeweils quer zum Steg 20 verlaufende Schlitze ausgebildet, welche vom Steg 20 gekreuzt werden, sodass sie in beide neben der Basis des Stegs 20 gebildeten Rinnen 15 münden.

Nach dem Einbringen der Auskleidefolie 3 in den Kunststoffeimer 4 und dem Aufbringen der Hüllfolie 7 und Verschweissen derselben längs der Schweissnaht 12, welche knapp unterhalb des Flansches 11 umläuft, fahren (Fig. 2c) die Hohlfinger in die Ringräume 17 und 19 ein, worauf durch die Kanäle 10 Luft abgesaugt wird. Die Luft fliesst dabei aus dem Inneren des Eimers durch die Löcher 14 an die Aussenseite und wird dort abgezogen. Durch den Unterdruck wird die Auskleidefolie 3 unter Dehnung an die Innenfläche des Kunststoffeimers 4 gesaugt. Schliesslich legt sich auch die Hüllfolie 7 eng an die Aussenfläche des Kunststoffeimers 4 an, wobei jedoch die Rinnen 15 auch dann noch freie Durchgänge bilden, wenn sie von der Hüllfolie 7 eng überspannt werden, sodass weiterhin Luft aus von den Ringräumen 17, 19 entfernten Gebieten in dieselben abgezogen werden kann. Am Ende dieses Schritts liegt die Auskleidefolie 3 eng an der Innenfläche des Kunststoffeimers 4 an.

Der minimale Durchmesser der Löcher 14 an der Innenfläche - im Fall der Schlitze im Boden 5 deren Breite, die Länge kann grösser sein - beträgt höchstens 1 mm, vorzugsweise nicht mehr als 0,5 mm, sodass keine Gefahr eines Einziehens oder gar Durchreissens der Auskleidefolie besteht. Sie sind gleichmässig derart über die Innenfläche verteilt, dass kein Punkt derselben weiter als 5 cm, vorzugsweise weniger als 2-3 cm von einem Loch entfernt ist. Nur im randnahen Bereich kann der Abstand etwas grösser, bis 10 cm sein. So ist ein problemloses Abziehen der Luft aus dem Inneren des Kunststoffeimers 4 gewährleistet.

Die Dimensionierung der Löcher 14 ergibt sich aus einer Optimierung bezüglich des Luftabzugs, der natürlich umso besser ist, je grösser der Querschnitt derselben ist, auf der einen Seite und bezüglich der Sicherung gegen ein Einziehen der Folie in die Löcher und eventuelles Durchreissen derselben auf der anderen Seite. Wie gross die zuletzt genannte Gefahr ist, hängt natürlich auch von der Beschaffenheit der Folie, insbesondere deren Stärke ab, sodass der Bereich, in dem das Verfahren zufriedenstellend funktioniert, u. U. auch über die oben angeführten Grenzwerte hinausgehen kann. Aehnliches gilt auch für die weiter oben erwähnte Breite, welche die Nuten in den Stegen 16 an der Oberfläche haben dürfen. Sie ist dadurch begrenzt, dass die Folie nicht in die Nut eingezogen werden darf, da sonst der Luftabzug behindert würde.

Ähnlich wie die Auskleidefolie 3 legt sich die Hüllfolie 7 eng an die Aussenfläche des Kunststoffeimers 4 an, wobei sie die Rinnen 15 jeweils überspannt und von deren Grund beabstandet ist. Dies ist auch deshalb erwünscht, weil dort oder an der Seitenwand 6 eventuell auch neben den Stegen 16 zur Entfernung der Hülle nach Gebrauch des Kunststoffeimers 4 Messer ansetzen können, die die Hüllfolie 7 zerschneiden, worauf dieselbe abgezogen werden kann, ohne dass die Gefahr einer Verletzung der Kunststoffeimer 4 durch die Messer bestünde. Das Entfernen der Auskleidefolie 3 wird durch Anwendung von Druckluft an der Aussenseite des Kunststoffeimers 4, die durch die Löcher 14 ins Innere desselben dringt, bewerkstelligt oder unterstützt.

Die Standfläche des Kunststoffeimers 4 wird im wesentlichen von einem inneren Ringsteg 21 und einem äusseren Ringsteg 22 und den radialen Stegen 20 gebildet. Die Ringstege 21, 22 weisen zwischen den Stegen 20 Ausnehmungen 23 auf, welche die Standfläche unterbrechen. So entstehen zwischen den Stegen 20 durchgehende radiale Streifen, an welchen gegebenenfalls eine ebene Unterlage, auf der der Kunststoffeimer 4 steht, die Hülle 7 nicht berührt. Sie kann dort also nicht durch Berührung mit der eventuell rauhen, z. B. aus Beton bestehenden Unterlage durchgescheuert werden, sodass sie auch dann, wenn sie an jenen Stellen, welche die Standfläche bilden, durchgerieben wird, an der Unterseite des Bodens 5 durch ein Netz von innerhalb des inneren Ringstegs 21 miteinander zusammenhängenden radialen Streifen zusammengehalten wird. So kann sich die Hülle 7 nicht vom Boden 5 und ausgehend vom unteren Rand derselben von der Seitenwand 6 ablösen, wie das bei einer vollständigen Abtrennung ihres den Boden 5 bedeckenden Teils möglich wäre.

## Patentansprüche

1. Kunststoffeimer (4) zum Auskleiden - umfassend einen Boden (5) und eine an denselben anschliessende umlaufende Seitenwand (6), deren vom Boden (5) abgewandter oberer Rand den Rand einer Oeffnung (8) bildet, des weiteren umfassend eine Innenfläche und eine Aussenfläche, welche längs des Randes der Öffnung (8) aneinandergrenzen - der mehrere über die Innenfläche verteilte bis zur Aussenfläche durchgehende Löcher (14) aufweist, **dadurch gekennzeichnet, dass** mindestens ein Teil dieser Löcher (14) einen Querschnitt aufweist, der sich jeweils gegen die Aussenfläche hin erweitert und dass die Löcher (14) mindestens zum Teil an der Aussenfläche in eine Rinne (15) münden, welche sich jeweils zum Rand des Bodens (5) oder zu einem Rand der Seitenwand (6) erstreckt.

2. Kunststoffeimer (4) nach Anspruch 1, **dadurch gekennzeichnet, dass** der minimale Durchmesser jedes Lochs (14) an der Innenfläche nicht grösser als 1 mm ist und dass kein Punkt der Innenfläche weiter als 5 cm vom nächsten Loch (14) und weiter als 10 cm vom Rand der Oeffnung (8) entfernt ist.

3. Kunststoffeimer (4) nach Anspruch 1, **dadurch gekennzeichnet, dass** die Seitenwand (6) desselben im Bereich des oberen Randes einen nach aussen abstehenden Flansch (11) aufweist und die Rinnen (15) sich bis mindestens in die Nähe der Basis des Flansches (11) erstrecken.

4. Kunststoffeimer (4) nach Anspruch 3, **dadurch gekennzeichnet, dass** der Flansch (11) derart umgebogen ist, dass er mit der Seitenwand (6) einen oberen Ringraum (17) bildet und dass die Rinnen (15) der Seitenwand (6) mindestens zum Teil in besagten oberen Ringraum (17) münden.

5. Kunststoffeimer (4) nach einem der Ansprüche 2 bis 4, **dadurch gekennzeichnet, dass** der Boden (5) von einem zwischen der Seitenwand (6) und einem von derselben abstehenden Ring (18) gebildeten unteren Ringraum (19) umgeben ist und dass die Rinnen (15) des Bodens (5) in besagten unteren Ringraum (19) münden.

6. Kunststoffeimer (4) nach einem der Ansprüche 2 bis 5, **dadurch gekennzeichnet, dass** die Rinnen (15) mindestens zum Teil als Nuten ausgebildet sind, in welche jeweils mehrere Löcher (14) münden.

7. Kunststoffeimer nach Anspruch 6, **dadurch gekennzeichnet, dass** die Nuten in Stegen (16) angelegt sind.

8. Kunststoffeimer (4) nach einem der Ansprüche 2 bis 7, **dadurch gekennzeichnet, dass** die Rinnen (15) mindestens zum Teil durch an der Aussenfläche angebrachte Stege (20) gebildet werden, an deren Basis die Löcher (14) in die Aussenfläche münden.

9. Kunststoffeimer (4) nach Anspruch 8, **dadurch gekennzeichnet, dass** die Löcher (14) jeweils als Schlitze ausgebildet sind, welche vom Steg (20) gekreuzt werden.

10. Kunststoffeimer (4) nach einem der vorhergehenden Ansprüche, **dadurch gekennzeichnet, dass** er eine ebene Standfläche aufweist, welche aus mehreren voneinander getrennten Teilflächen besteht.

11. Verfahren zum Aufbringen einer Auskleidung aus Kunststoff auf mindestens einen Teil einer von einer Oeffnung (8) begrenzten Innenfläche eines Kunststoffeimers (4) nach einem der Ansprüche 1 bis 10, **dadurch gekennzeichnet, dass** das Auskleidungsmaterial in verformbarem Zustand in den Kunststoffeimer (4) eingebracht und an die Innenfläche desselben angedrückt wird.

12. Verfahren nach Anspruch 11, **dadurch gekennzeichnet, dass** das Andrücken mittels eines in den Kunststoffeimer (4) eingebrachten Stempels (1) erfolgt.

13. Verfahren nach Anspruch 12, **dadurch gekennzeichnet, dass** das Auskleidungsmaterial vor dem Andrücken auf den Stempel (1) aufgebracht wird.

14. Verfahren nach Anspruch 13, **dadurch gekennzeichnet, dass** das Auskleidungsmaterial als Auskleidefolie (3) vorliegt und das Aufbringen auf den Stempel (1) durch Aufwickeln erfolgt.

15. Verfahren nach einem der Ansprüche 12 bis 14, **dadurch gekennzeichnet, dass** das Andrücken durch elastische Dehnung des Stempels (1) erfolgt.

16. Verfahren nach einem der Ansprüche 12 bis 15, **dadurch gekennzeichnet, dass** das Andrücken durch Absaugen von Gas aus dem zwischen der Innenfläche des Kunststoffeimers (4) und der ihr zugewandten Oberfläche des Auskleidungsmaterials liegenden Bereich unterstützt wird.

17. Verfahren nach Anspruch 11, **dadurch gekennzeichnet, dass** das Auskleidungsmaterial als Auskleidefolie (3) in den Kunststoffeimer (4) eingebracht wird und das Andrücken durch Herstellen eines relativen Unterdrucks auf der der Innenfläche des Kunststoffeimers (4) zugewandten Seite der Auskleidefolie (3) bewirkt wird.

18. Verfahren nach Anspruch 17, **dadurch gekennzeichnet, dass** der Unterdruck durch Absaugen von Gas aus dem zwischen der Innenfläche und der Auskleidefolie (3) liegenden Bereich hergestellt wird.

19. Verfahren nach Anspruch 17 oder 18, **dadurch gekennzeichnet, dass** die Auskleidefolie (3) über der Oeffnung (8) des Kunststoffeimers (4) ausgespannt wird und das anschliessende Einbringen derselben durch Tiefziehen mittels eines Stempels (1) mindestens unterstützt wird.

20. Verfahren nach einem der Ansprüche 17 bis 19, **dadurch gekennzeichnet, dass** die Auskleidefolie (3) vor dem Einbringen erwärmt wird.

21. Verfahren nach einem der Ansprüche 11 bis 20, **dadurch gekennzeichnet, dass** auf mindestens einen Teil der Aussenfläche des Kunststoffeimers (4) eine Hülle aus Kunststoff aufgebracht wird und die Hülle mit der Auskleidung längs einer Nahtlinie verschweisst wird, sodass sie einen vollständigen Ueberzug des Kunststoffeimers (4) bilden.

22. Verfahren nach Anspruch 21, **dadurch gekennzeichnet, dass** das Hüllmaterial als Hüllfolie (7) vorliegt.

23. Verfahren nach Anspruch 22, **dadurch gekennzeichnet, dass** das Aufbringen der Hüllfolie (7) durch Aufwickeln erfolgt.

24. Verfahren nach Anspruch 21, **dadurch gekennzeichnet, dass** das Aufbringen der Hüllfolie (7) durch Hochziehen mindestens eingeleitet wird.

25. Verfahren nach Anspruch 24, **dadurch gekennzeichnet, dass** die Hüllfolie (7) vor dem Aufbringen erwärmt wird.

26. Verfahren nach Anspruch 24 oder 25, **dadurch gekennzeichnet, dass** die Hüllfolie (7) durch Absaugen von Gas aus dem zwischen derselben und der Aussenfläche des Kunststoffeimers (4) liegenden Bereich an die Aussenfläche angedrückt wird.

27. Verfahren nach den Ansprüchen 18 und 26, **dadurch gekennzeichnet, dass** das Absaugen der Luft aus dem zwischen der Auskleidefolie (3) und der Innenfläche liegenden Bereich und aus dem zwischen der Hüllfolie (7) und der Aussenfläche liegenden Bereich gleichzeitig mittels einer mindestens im Bereich der Nahtlinie wirksamen Saugvorrichtung erfolgt.

## Claims

1. Plastic bucket (4) which is to be lined - comprising a base (5) and a peripheral side wall (6) which adjoins said base and whose top border remote from the base (5) forms the border of an opening (8), and further comprising an inner surface and an outer surface which adjoin one another along the border of the opening (8) - and which has a plurality of holes (14) which are distributed over the inner surface and continue as far as the outer surface, characterized in that at least some of these holes (14) have a cross-section which widens in each case towards the outer surface, and in that the holes (14), at least in part, open at the outer surface into a channel (15) which extends in each case to the border of the base (5) or to the border of the side wall (6).

2. Plastic bucket (4) according to Claim 1, characterized in that the minimum diameter of each hole (14) at the inner surface is not more than 1 mm, and in that no point of the inner surface is spaced apart from the next hole (14) by more than 5 cm and from the border of the opening (8) by more than 10 cm.

3. Plastic bucket (4) according to Claim 1, characterized in that the side wall (6) of the same has an outwardly projecting flange (11) in the region of the top border, and the channels (15) extend at least into the vicinity of the bottom of the flange (11).

4. Plastic bucket (4) according to Claim 3, characterized in that the flange (11) is bent over such that it forms, with the side wall (6), a top annular space (17), and in that the channels (15) of the side wall (6), at least in part, open into said top annular space (17).

5. Plastic bucket (4) according to one of Claims 2 to 4, characterized in that the base (5) is enclosed by a bottom annular space (19) formed between the side wall (6) and a ring (18) which projects from said side wall, and in that the channels (15) of the base (5) open into said bottom annular space (19).

6. Plastic bucket (4) according to one of Claims 2 to 5, characterized in that the channels (15), at least in part, are designed as grooves into which a plurality of holes (14) open in each case.

7. Plastic bucket according to Claim 6, characterized in that the grooves are provided in fins (16).

8. Plastic bucket (4) according to one of Claims 2 to 7, characterized in that the channels (15), at least in part, are formed by fins (20) which are provided on the outer surface and at the bottom of which the holes (14) open into the outer surface.

9. Plastic bucket (4) according to Claim 8, characterized in that the holes (14) are each designed as slits which are intersected by the fin (20).

10. Plastic bucket (4) according to one of the preceding claims, characterized in that it has a planar standing surface which comprises a plurality of subsurfaces which are separated from one another.

11. Process for applying a plastic lining to at least part of an inner surface, bounded by an opening (8), of a plastic bucket (4) according to one of Claims 1 to 10, characterized in that the lining material is introduced in a deformable state into the plastic bucket (4) and is pressed onto the inner surface of said bucket.

12. Process according to Claim 11, characterized in that the pressing-on operation takes place by means of a male die (1) which is introduced into the plastic bucket (4).

13. Process according to Claim 12, characterized in that the lining material is applied to the male die (1) before the pressing-on operation.

14. Process according to Claim 13, characterized in that the lining material is in the form of lining sheeting (3), and it is applied to the male die (1) by winding on.

15. Process according to one of Claims 12 to 14, characterized in that the pressing-on operation takes place by elastic expansion of the male die (1).

16. Process according to one of Claims 12 to 15, characterized in that the pressing-on operation is assisted by the extraction of gas from the region located between the inner surface of the plastic bucket (4) and that surface of the lining material which faces said inner surface.

17. Process according to Claim 11, characterized in that the lining material is introduced into the plastic bucket (4) as lining sheeting (3), and the pressing-on operation is effected by producing a relative negative pressure on that side of the lining sheeting (3) which faces the inner surface of the plastic bucket (4).

18. Process according to Claim 17, characterized in that the negative pressure is produced by the extraction of gas from the region located between the inner surface and the lining sheeting (3).

19. Process according to Claim 17 or 18, characterized in that the lining sheeting (3) is stretched out over the opening (8) of the plastic bucket (4), and the subsequent introduction of said sheeting by thermoforming is at least assisted by means of a male die (1).

20. Process according to one of Claims 17 to 19, characterized in that the lining sheeting (3) is heated before it is introduced.

21. Process according to one of Claims 11 to 20, characterized in that a plastic sheath is applied to at least part of the outer surface of the plastic bucket (4), and the sheath is welded to the lining along a seam, so that together they form a covering for the entire plastic bucket (4).

22. Process according to Claim 21, characterized in that the sheathing material is in the form of sheathing sheeting (7).

23. Process according to Claim 22, characterized in that the sheathing sheeting (7) is applied by winding on.

24. Process according to Claim 21, characterized in that the application of the sheathing sheeting (7) is at least initiated by drawing said sheeting upwards.

25. Process according to Claim 24, characterized in that the sheathing sheeting (7) is heated before it is applied.

26. Process according to Claim 24 or 25, characterized in that the sheathing sheeting (7) is pressed onto the outer surface by the extraction of gas from the region located between said sheeting and the outer surface of the plastic bucket (4).

27. Process according to Claims 18 and 26, characterized in that the extraction of air from the region located between the lining sheeting (3) and the inner surface and from the region located between the sheathing sheeting (7) and the outer surface takes place simultaneously by means of a suction device which acts at least in the region of the seam.

## Revendications

1. Seau en matière synthétique (4) à recouvrir - comprenant un fond (5) et une paroi latérale périphérique (6) se raccordant à ce dernier, dont l'arête supérieure qui se détourne du fond (5) forme l'arête d'une ouverture (8), comprenant en outre un surface interne et une surface externe qui sont contiguës le long de l'arête de l'ouverture (8) - qui présente plusieurs trous (14) s'étendant en continu jusqu'a la surface externe, répartis sur la surface interne, caractérisé en ce qu'au moins une partie de ces trous (14) présentent une section transversale qui s'élargit respectivement en direction de la surface externe et en ce que les trous (14) débouchent au moins en partie à la surface externe dans un conduit (15) qui s'étend respectivement jusqu'à l'arête du fond (5) ou jusqu'à une arête de la paroi latérale (6).

2. Seau en matière synthétique (4) selon la revendication 1, caractérisé en ce que le diamètre minimal de chaque trou (14) à la surface interne n'est pas supérieur à 1 mm et en ce qu'aucun endroit de la surface interne n'est éloigné de plus de 5 cm du trou le plus proche (14) et de plus de 10 cm de l'arête de l'ouverture (8).

3. Seau en matière synthétique (4) selon la revendication 1, caractérisé en ce que la paroi latérale de ce dernier, dans la zone de l'arête supérieure, présente une bride (11) faisant saillie vers l'extérieur et les conduits (15) s'étendent au moins jusqu'à proximité de la base de la bride (11).

4. Seau en matière synthétique (4) selon la revendication 3, caractérisé en ce que la bride (11) est cintrée de telle sorte qu'elle forme avec la paroi latérale (6), un espace annulaire supérieur (17) et en ce que les conduits (15) de la paroi latérale (6) débouchent au moins en partie dans l'espace annulaire supérieur mentionné (17).

5. Seau en matière synthétique (4) selon l'une quelconque des revendications 2 à 4, caractérisé en ce que le fond (5) est entouré par un espace annulaire inférieur (19) formé entre la paroi latérale (6) et un anneau (18) faisant saillie par rapport à cette dernière, et en ce que les conduits (15) du fond (5) débouchent dans l'espace annulaire inférieur mentionné (19).

6. Seau en matière synthétique (4) selon l'une quelconque des revendications 2 à 5, caractérisé en ce que les conduits (15) sont réalisés au moins en partie en forme de rainures dans lesquelles débouchent respectivement plusieurs trous (14).

7. Seau en matière synthétique (4) selon la revendication 6, caractérisé en ce que les rainures sont disposées contre des nervures (16).

8. Seau en matière synthétique (4) selon l'une quelconque des revendications 2 à 7, caractérisé en ce que les conduits (15) sont formés au moins en partie par des nervures (20) disposées contre la surface externe, à la base desquelles les trous (14) débouchent dans la surface externe.

9. Seau en matière synthétique (4) selon la revendication 8, caractérisé en ce que les trous (14) sont réalisés respectivement en forme de fentes qui sont croisées par la nervure (20).

10. Seau en matière synthétique (4) selon l'une quelconque des revendications précédentes, caractérisé en ce qu'il présente une surface d'appui plane qui est constituée par plusieurs surfaces partielles séparées l'une de l'autre.

11. Procédé pour l'application d'un revêtement en matière synthétique sur au moins une partie d'une surface interne d'un seau en matière synthétique (4), délimitée par une ouverture (8), selon l'une quelconque des revendications 1 à 10, caractérisé en ce que la matière de revêtement est introduite à l'état déformable dans le seau en matière synthétique (4) et est pressée contre la surface interne de ce dernier.

12. Procédé selon la revendication 11, caractérisé en ce qu'on réalise la pression au moyen d'une matrice (1) introduite dans le seau en matière synthétique (4).

13. Procédé selon la revendication 12, caractérisé en ce que la matière de revêtement est appliquée sur la matrice (1) avant la pression.

14. Procédé selon la revendication 13, caractérisé en ce que la matière de revêtement est présente sous forme de feuille de revêtement (3) et l'application sur la matrice (1) a lieu par enroulement.

15. Procédé selon l'une quelconque des revendications 12 à 14, caractérisé en ce qu'on réalise la pression par allongement élastique de la matrice (1).

16. Procédé selon l'une quelconque des revendications 12 à 15, caractérisé en ce que la pression est soutenue par l'aspiration du gaz hors de la zone située entre la surface interne du seau en matière synthétique (4) et la surface de la matière de revêtement se tournant vers la première citée.

17. Procédé selon la revendication 11, caractérisé en ce qu'on introduit la matière de revêtement sous forme de feuille de revêtement (3) dans le seau en matière synthétique(4) et on réalise la pression en appliquant une sous-pression relative sur le côté de la feuille de revêtement (3) se tournant vers la surface interne du seau en matière synthétique (4).

18. Procédé selon la revendication 17, caractérisé en ce qu'on applique la sous-pression par aspiration du gaz hors de la zone située entre la surface interne et la feuille de revêtement (3).

19. Procédé selon la revendication 17 ou 18, caractérisé en ce que la feuille de revêtement (3) est étendue par-dessus l'ouverture (8) du seau en matière synthétique (4) et l'insertion ultérieure de cette dernière par emboutissage est au moins soutenue par une matrice (1).

20. Procédé selon l'une quelconque des revendications 17 à 19, caractérisé en ce que la feuille de revêtement (3) est chauffée avant son insertion.

21. Procédé selon l'une quelconque des revendications 11 à 20, caractérisé en ce qu'on applique, au moins sur une partie de la surface externe du seau en matière synthétique (4), une enveloppe en matière synthétique et on soude l'enveloppe avec le revêtement le long d'une ligne de joint, si bien qu'elles forment un revêtement complet du seau en matière synthétique (4).

22. Procédé selon la revendication 21, caractérisé en ce que la matière d'enveloppement est présente sous forme d'une feuille d'enveloppement (7).

23. Procédé selon la revendication 22, caractérisé en ce que l'application de la feuille d'enveloppement (7) a lieu par enroulement.

24. Procédé selon la revendication 21, caractérisé en ce que l'application de la feuille d'enveloppement (7) est au moins amorcée par soulèvement.

25. Procédé selon la revendication 24, caractérisé en ce que la feuille d'enveloppement (7) est chauffée avant son application.

26. Procédé selon la revendication 24 ou 25, caractérisé en ce que la feuille d'enveloppement (7) est pressée contre la surface externe par aspiration du gaz hors de la zone située entre la première citée et la surface externe du seau en matière synthétique (4).

27. Procédé selon les revendications 18 et 26, caractérisé en ce qu'on réalise l'aspiration de l'air hors de la zone située entre la feuille de revêtement (3) et la surface interne et hors de la zone située entre la feuille d'enveloppement (7) et la surface externe, de manière simultanée au moyen d'un dispositif d'aspiration qui exerce son activité au moins dans la zone de la ligne de joint.
